## Europäisches Patentamt
## European Patent Office
## Office européen des brevets

(19)

(11) Numéro de publication: **0 063 124 B1**

(12) **FASCICULE DE BREVET EUROPEEN**

(45) Date de publication du fascicule du brevet:
06.02.85

(51) Int. Cl.⁴: **A 23 L 2/30**

(21) Numéro de dépôt: **81902272.4**

(22) Date de dépôt: **10.08.81**

(86) Numéro de dépôt international:
**PCT/FR 81/00098**

(87) Numéro de publication internationale:
**WO 82/00569 (04.03.82 Gazette 82/7)**

(54) **PROCEDE D'OBTENTION DE JUS CLAIRS DE VEGETAUX ET DE RECUPERATION DE CONSTITUANTS VALORISABLES.**

(30) Priorité: 13.08.80 FR 8017805
09.07.81 FR 8113481

(43) Date de publication de la demande:
27.10.82 Bulletin 82/43

(45) Mention de la délivrance du brevet:
06.02.85 Bulletin 85/6

(84) Etats contractants désignés:
**AT CH DE GB LI LU NL SE**

(56) Documents cités:
**FR - A - 2 202 655**
**FR - A - 2 443 216**

**Chemical Technology, published in October 1971, (US)**
**M.C. Porter et al "Membrane ultrafiltration, Part 4.**
**Application in processing vegetal foods and beverages",**
**pages 633-7**

(73) Titulaire: **VERNIERS S.A., 15 rue du Louvre,**
**F-75001 Paris (FR)**
Titulaire: **Vrignaud, Yves, 5, avenue Rivoli,**
**F-92190 Meudon (FR)**
Titulaire: **Blanié, Paul, 282 rue Saint-Jacques,**
**F-75005 Paris (FR)**

(72) Inventeur: **VERNIERS, Claude, 15 rue du Louvre,**
**F-75001 Paris (FR)**
Inventeur: **VRIGNAUD, Yves, 5, avenue Rivoli,**
**F-92190 Meudon (FR)**
Inventeur: **BLANIE, Paul, 282 rue St. Jacques,**
**F-75005 Paris (FR)**

(74) Mandataire: **Armengaud, Alain, Cabinet ARMENGAUD**
**AINE 3 Avenue Bugeaud, F-75116 Paris (FR)**

ACTORUM AG

## Description

La présente invention a pour objet des procédés de traitement de végétaux et en particulier de fruits et légumes, d'une part pour en extraire des jus principalement alimentaires et/ou colorants, et d'autre part pour récupérer des matières diverses et en particulier des pectines. La présente invention a également pour objet les produits obtenus par ces procédés.

Dans l'art antérieur, il est connu de très longue date d'extraire le jus de fruits et de légumes et il n'est pas possible d'en résumer l'évolution. On indiquera cependant ci-dessous le procédé actuellement le plus répandu et le plus récent, par exemple pour les jus de pomme. Il consiste essentiellement dans les phases suivantes:

1. pressage séparant jus et pulpe
2. pasteurisation vers 80° C
3. stockage avec action des enzymes de dépectination vers 40° C
4. refroidissement vers 15° C
5. collage à la gélatine et à la bentonite
6. décantation
7. clarification par séparateur centrifuge (les boues liquides sont envoyées à l'épuration)
8. filtration sur Kieselguhr des jus clarifiés
9. filtration sur filtre-presse
10. pasteurisation vers 80° C
11. concentration en évaporateur

Une telle séquence d'opérations dure entre 28 et 36 heures en moyenne et consomme une grande quantité d'énergie notamment du fait des deux pasteurisations séparées par une série de traitements à températures nettement plus basses. De plus, on consomme, par de tels procédés une quantité non négligeable d'adjuvants de filtration et autres.

Il était donc important de trouver un procédé plus économique et plus rapide mais également, comme on le verra à la description qui va suivre, réduisant les quantités de déchets inutilisables.

Le procédé conforme à la présente invention, du fait de la réduction considérable de la durée des opérations, permet de travailler en continu ou non. On peut notamment arrêter les opérations le dimanche et les jours fériés dès lors que l'on ne doit plus passer par un travail en cuve nécessairement de longue durée.

Par ailleurs, deux des déposants des présentes sont titulaires du brevet français N° 2443216, intitulé: «Procédé pour clarification de jus de pommes et analogues avec récupération de concentré de pectine».

Dans ce brevet, on traite les jus de pommes par deux ultrafiltrations successives séparées par une addition d'eau, les jus de pressage étant à une température de 50 à 55° C et dont le pH est de 3,5 à 4.

Le traitement se fait sur des surfaces de membranes de 150 et 50 m². Or, l'expérience a montré qu'en dépit de ces avantages très importants par rapport à l'art antérieur, ce procédé présentait des imperfections voire des inconvénients auxquels la présente invention porte remède.

Dans le brevet antérieur, on est amené à ajouter de l'eau. Or, non seulement cette addition d'eau est souvent gênante pour la qualité des produits finaux mais, qui plus est, de nombreuses législations en interdisent l'emploi.

Par ailleurs, les limites de températures et de pH prescrites peuvent être en fait assez nettement dépassées en pratique dans la mesure où l'on fait descendre la température du pH mesuré, c'est-à-dire où l'on a tendance à réduire la température lorsque le pH augmente et réciproquement.

Par ailleurs comme on le verra plus loin, on a défini de façon assez précise les niveaux de coupures des membranes d'ultrafiltration donnant les meilleurs résultats.

En plus des améliorations apportées par rapport à ce brevet français antérieur, le procédé conforme à la présente invention présente de grands avantages par rapport aux autres techniques antérieures, et notamment permet, du fait de la réduction considérable de la durée des opérations, de travailler en continu ou non.

De plus, dans de nombreux cas, on cherche à sauvegarder la pigmentation originale du végétal. Or, celle-ci est généralement en grande partie diminuée par les traitements thermiques, tels que les pasteurisations, chacune d'entre elles réduisant la pigmentation de 15 à 20%, dans la plupart des cas, par le vieillissement et les traitements d'agitation, qui entraînent des oxydations et des changements de couleurs. On soulignera que, dans de nombreux cas classiques, des réactions de Maillard, dues à la température et au vieillissement, produisent des dénaturations de produits et de couleurs.

La présente invention, comme on le verra dans la description qui va suivre, permet d'éviter ces graves inconvénients des procédés antérieurs.

Cette invention a donc pour objet un procédé d'obtention de jus clair de végétaux, dans lequel le jus venant du pressage est soumis à ultrafiltration sur membrane, donnant des premiers jus clairs et des premiers rétentats, le premier rétentat étant envoyé à une seconde ultrafiltration sur membrane, donnant des seconds jus clairs et des seconds rétentats, les ultrafiltrations étant à au moins un étage sur membrane à niveau de coupure moléculaire de l'ordre de 15 000 à 25 000, caractérisé en ce que le pH et la température des jus, à l'entrée des ultrafiltrations, sont liés par la relation:

$$T°C = -6\,pH + 80°C \pm 3°C.$$

Dans l'art antérieur, on a utilisé l'osmose inverse, et il est important de souligner les différences entre l'ultrafiltration et l'osmose inverse.

L'ultrafiltration assure une coupure sélective des constituants au niveau moléculaire correspondant au but recherché. Selon le présent procédé, on utilise des membranes dont le point de coupure est situé aux alentours d'une masse moléculaire de 15 000 à 25 000.

Par contre, en osmose inverse, on sépare essentiellement l'eau d'un produit du concentrat contenant pratiquement tous les éléments de masse moléculaire élevée dans une masse liquide. Les membranes d'osmose inverse sont beaucoup plus fines que celles d'ultrafiltration, et la coupure est approximativement aux alentours d'une masse moléculaire de l'ordre de 100, par exemple. Par ailleurs, l'ultrafiltration ne nécessite que des pressions nettement inférieures à celles de l'osmose inverse. Par exemple, on travaille, en ultrafiltration, aux alentours de 4 kg/cm², alors qu'en osmose inverse, on travaille aux alentours de 12 kg/cm².

Selon le procédé à la suite d'un pressage classique, on sépare les pulpes d'un premier jus dit jus brut. On mesure alors le pH et on règle la température, puis on passe à un premier étage d'ultrafiltration qui sépare le premier jus clair d'un concentrat pectique brut. On peut diluer ce dernier si besoin est, par exemple à l'eau ou au jus clair, selon les possibilités que laisse la législation locale. On le passe à au moins un deuxième étage d'ultrafiltration séparant au moins un second jus clair riche en sucre et en arôme que l'on ajoute éventuellement au premier, et le concentrat pectique car c'est à ces étages ultérieurs d'ultrafiltration que l'on va séparer et concentrer tout ce qui est d'une masse moléculaire supérieure à 15 000 à 25 000, par exemple 20 000, c'est-à-dire essentiellement les protéines, les pectines, les amidons et une partie des tannins.

L'expérience montre que les jus de fruits et de légumes brunissent avec le temps notamment lors du transport et du stockage. Ceci est dû à des réactions du type réaction de Maillard et à des oxydations. Or, selon le présent procédé, on obtient des jus très clairs ne brunissant plus que faiblement du fait de l'élimination des protéines indispensables aux réactions de Maillard et que les contacts avec l'air sont très limités.

Par ailleurs, selon le présent procédé, on ne recourt pas, pour la clarification, à l'addition traditionnelle de gélatine dont la teneur importante en protéines solubles renforce la tendance au brunissement en présence des sucres.

De plus, selon le présent procédé, on obtient des jus stériles qui n'ont pas tendance à la fermentation.

C'est ce qui permet notamment d'éviter les pasteurisations successives indispensables dans les procédés classiques car, selon le présent procédé, les bactéries restent dans le rétentat.

Cette différence est encore plus nette avec certains produits comme la betterave rouge qui, chargée de terre, introduit une grande quantité de bactéries sporulées difficiles à détruire par traitements thermiques.

De plus, toujours pour les betteraves, on est obligé d'effectuer trois pasteurisations à plus de 90° C qui détruisent chaque fois 10% de la puissance colorante.

Ce problème se retrouve avec d'autres fruits à coloration intense. Le présent procédé y apporte une remarquable solution.

Un autre avantage du présent procédé est tout à fait remarquable lors du traitement de certains fruits: par exemple, les fraises contiennent des gélifiants naturels du type polypeptides qui sont éliminés à l'ultrafiltration. Dans le procédé classique, on est gêné par des gélifications intempestives du concentré. Le présent procédé présente des avantages analogues pour certains produits s'oxydant très vite notamment lorsque le traitement centrifuge augmente la surface de contact entre produits et oxygène de l'air. En éliminant la centrifugation, le présent procédé diminue les apports d'air dans le produit et donc les risques d'oxydation.

Pour mieux faire comprendre les caractéristiques techniques et les avantages de la présente invention, on va en décrire des exemples de réalisation étant entendu que ceux-ci ne sont pas limitatifs quant à leur mode de mise en œuvre et aux applications qu'on peut en faire.

*Exemple 1:*

En prenant comme exemple le traitement des jus de pommes, selon un procédé conforme à la présente invention, on commence par une opération de pressage de tous types classiques, permettant de séparer les jus bruts des pulpes. On va ainsi soumettre les jus à un chauffage à des températures de l'ordre de 50 à 60° C mais plus précisément, et préférentiellement, à une température de l'ordre de 57 à 59° C, le pH étant contrôlé entre 3,5 et 4. Bien que cela ne soit généralement pas nécessaire, on pourrait faire appel pour corriger le pH à tout additif classique adéquat autorisé mais selon l'invention, on évite cette correction en faisant varier la température en fonction du pH. On passe le jus en ultrafiltration, de préférence sur des membranes tubulaires dont le point de coupure correspondra à une masse moléculaire de 15 000 à 25 000, par exemple, de l'ordre de 20 000.

On remarquera au sujet de cette ultrafiltration que, pour obtenir les meilleurs résultats, si le pH est inférieur à 3,5 (par exemple 3,3) il est nécessaire d'augmenter la température par exemple à 62° C. Si, au contraire, le pH est trop haut, il faut se placer à une température plus basse: pour un pH supérieur (par exemple de l'ordre de 4,2), on réduit la température par exemple à 56° C; on n'a donc pas à rectifier le pH pour l'amener dans les limites de 3,5 à 4 tout en restant dans la gamme 50 à 65° C. Si le pH est de 3,8 on est alors dans la zone souhaitée et on reste à 58° C.

On applique une loi qui tient compte sensiblement des chiffres obtenus expérimentalement.

T° C = −6 pH + 80° C (à ± 3° C près), ce qui donne les résultats suivants:

| PH | 3 | 3,5 | 4 | 4,5 |
|---|---|---|---|---|
| T° C moyenne | 62° C | 59° C | 56° C | 53° C |
| T° C ± 3° C | 59 à 65° C | 56 à 62° C | 53 à 59° C | 50 à 56° C |

Cette loi est à la fois limitée pour les pH imposés par la nature et par ce fait en température mais également par la température maximale éventuellement imposée par les membranes utilisées.

On est obligé de rester à une température maximale de 65° C et même 62° C avec nombre de membranes existant actuellement sur le marché. Cette contrainte de température tend actuellement à disparaître avec l'utilisation pour l'ultrafiltration sur matériaux métalliques ou autres matériaux poreux à porosité déterminée.

L'homme de l'art pourra utiliser tout dispositif classique de régulation automatique ou non, pour ajuster ainsi la température en fonction du pH mesuré selon la formule ci-dessus définie. Lorsqu'on traite des produits chargés en matières en suspension, dans l'état actuel de la technique, les membranes planes présentent de graves inconvénients notamment du point de vue du colmatage entre surfaces parallèles par rapport aux membranes tubulaires. L'utilisation de membranes tubulaires présentant un espace plus grand et une vitesse de circulation linéaire des fluides plus grande, on réduit les risques de colmatage et par suite la fréquence des nettoyages.

Comme on le précisait dans le brevet français mentionné ci-dessus et pour fixer les idées, si l'on veut traiter environ 20 000 l/h de jus brut de pressage de pommes il faut environ 150 m² de membrane à ce premier étage d'ultrafiltration répartis par exemple en trois modules. On recueille à la sortie d'une part un premier jus clair et d'autre part un concentrat pectique brut. Ce premier concentrat éventuellement redilué passe dans un deuxième étage d'ultrafiltration toujours de préférence sur membranes tubulaires, mais sur une surface réduite à environ un tiers de celle du premier étage ce qui permet à la sortie d'obtenir le désucrage au moins partiel de ce concentrat, ce qui donne d'une part un second jus clair et un second rétentat plus concentré dont il est aisé de tirer les pectines par filtre-presse et séchage ou tout autre traitement nécessité par la séparation des pectines. On peut si cela est autorisé par les réglementations cas par cas, rassembler l'ensemble des deux jus clairs ce qui donne un jus clair total. Chacun des deux jus ou le jus clair total n'ont pas besoin d'être pasteurisés et on peut les concentrer par tout moyen adéquat. Selon les réglementations, le premier jus et/ou le second jus et/ou le jus total peuvent être stockés pour utilisation tels quels (embouteillage) ou concentrés.

On constate que, par ce procédé et dans le cas de l'exemple décrit, on réduit de moitié environ les boues inutiles extraites, environ 75 kg pour une tonne de fruits contre 150 kg habituellement, ce qui tout en ne perdant rien des pectines et autres produits récupérables, augmente le rendement de production des jus avec des économies importantes d'énergie.

*Exemple 2:*

La clarification des jus de betterave rouge par ultrafiltration conformément à l'invention est particulièrement intéressante du fait que ces produits sont généralement très chargés en bactéries sporulées anaérobies provenant du sol et qui sont particulièrement difficiles à détruire par la chaleur. Selon l'art antérieur, il faut trois ou quatre pasteurisations à plus de 120° C pour obtenir un liquide ne contenant pas plus de 100 germes par millilitre.

Or, on sait que chaque choc thermique et donc chaque pasteurisation a des températures de 70° C et plus, cause la destruction de 15 à 20% de pigments rouges ce qui peut entraîner plus de 50% de destructions.

Si l'on se réfère aux conditions décrites ci-dessus, les pH des jus de betterave rouge étant de l'ordre de 3,8 à 4,2 les températures optimales (quant au débit) sont donc étagées entre 57,2 ± 3° C et 54,8 ± 3° C. L'expérience montre que l'on obtient de bons débits entre 55 et 59° C mais que l'on a intérêt, pour éviter des surchauffes et des destructions de pigments, à travailler entre 55 et 57° C.

Si l'on règle la pression à l'entrée de l'ultrafiltration à 4 kg/cm², le débit en jus clair à la sortie par mètre carré de membrane et par heure, est de l'ordre de 100 à 120 l/m²/h, le débit le plus fort (110 à 120 l/m²/h) étant atteint vers 57 à 59° C à l'entrée des jus bruts et le plus faible (100 à 110 l/m²/h) vers 55 à 57° C, la pigmentation étant alors mieux conservée.

*Exemple 3:*

On peut également travailler dans les conditions définies à l'exemple 1 et aux pressions indiquées ci-dessus, mais en réduisant la température d'entrée des jus bruts à 35 à 40° C. On constate alors une remarquable qualité des produits filtrés notamment en ce qui concerne la pigmentation mais le débit en jus clair tombe à 60 à 70 l/m²/h ce qui reste supérieur aux débits de l'art antérieur.

*Exemple 4:*

L'art antérieur a démontré que la concentration des jus de betterave est limitée par la teneur en sucre qui est de 4 à 6° Brix. Il en va donc de même de la concentration en pigment dans les concentrés. Par fermentation préalable par des levures, on réduit la teneur en sucre de 50 à 80%. Il est alors possible par ultrafiltration selon la présente invention d'obtenir une considérable amélioration de la pigmentation des jus clairs en agissant comme il est dit à l'exemple 1 ou à l'exemple 2 ci-dessus.

En ce qui concerne l'ensemble des exemples 2 à 4, il convient de faire la remarque suivante: selon l'art antérieur, après fermentation, pour séparer les levures, il fallait utiliser des clarificateurs/centrifuges qui entraînaient une perte de pigment par oxydation due au brassage liquide-air, et une perte de jus dans les boues de l'ordre de 6 à 8% des volumes traités. Après centrifugation, il fallait filtrer et pasteuriser à haute température (à 120° C) pour détruire un maximum de germes. Grâce à l'invention les jus, qu'ils soient ou non préalablement fermentés, sont bactériologiquement propres à l'issue de l'ultrafiltration. Les contrôles bactériologiques à la sortie montrent qu'il reste en moyenne moins de dix germes totaux par millilitre au lieu de 50 000 après la première pasteurisation.

L'ultrafiltration du jus de betterave rouge permet donc dans les exemples 2 à 4:

1) d'obtenir un liquide clair bactériologiquement propre,

2) de réduire, voire d'annuler les pertes de pigments consécutives aux traitements thermiques.

*Exemple 5:*

En ce qui concerne les fraises, on peut partir de fruits frais ou décongelés. On les écrase en purée et on passe dans un nettoyeur décanteur pour éliminer akènes, queues et autres impuretés mais sans qu'il soit besoin de passer au débourbeur.

Les jus bruts de fraise sont acides à pH de 3,3 à 3,6 et présentent de 5,6 à 7° Brix selon les variétés et la maturité des fruits. La clarification par ultrafiltration peut être effectuée de diverses façons suivant les fruits à traiter et la couleur de concentré recherchée. Certaines variétés ont un jus qui s'oxyde rapidement ce qui se traduit par un virage au rouge vers un brun de plus en plus foncé avec le vieillissement. Ce brunissement est d'autant plus rapide que le jus est chauffé en présence d'oxygène (et donc d'air).

Selon le présent exemple, on traite de la façon suivante les fraises dont la coloration est peu sensible à l'oxydation ou pour lesquelles on attache moins d'importance à la pigmentation finale du concentré.

On agit comme à l'exemple 1. La température d'entrée correspondant à pH de 3,3 à 3,6 est donc de $60,2 \pm 3°$ C à $58,4 \pm 3°$ C soit en arrondissant de 55 à 63° C. Comme pour la betterave, ces températures donnent de bons résultats, la plus élevée donnant un meilleur débit, la plus faible une meilleure coloration et ceci à des pressions de 4 kg/cm² à l'entrée et de 1,5 kg/cm² à la sortie comme il a été utilisé ci-dessus.

Pour des températures d'entrée de 55 à 57° C, on constate un débit de 80 à 90 l/m²/h, ce qui est encore très supérieur à l'art antérieur. A la sortie, le jus clair bien coloré et bactériologiquement propre peut être pasteurisé à 85° C avant concentration.

*Exemple 6:*

Toujours aux mêmes pressions d'entrée et de sortie, et pour les pH considérés, on peut ultrafiltrer le jus brut tel que préparé à l'exemple 5 et cela à basse température comme à l'exemple 3 pour la betterave rouge. Le débit est de l'ordre de 60 l/m²/h ce qui est toujours acceptable par rapport à l'art antérieur, mais la qualité de clarté et de pigmentation est exceptionnelle. Le jus est bactériologiquement propre et on peut le pasteuriser à 85° C avant concentration.

En ce qui concerne les exemples 5 et 6, on remarquera que la purée de fraise n'est pas débourbée avant ultrafiltration ce qui diminue les pertes de jus.

Les jus concentrés sont toujours clairs et ne se troublent pas au stockage comme c'est le cas dans l'art antérieur. Qui plus est, comme cela a été souligné dans le brevet antérieur, avec certaines variétés de fraises et selon leur maturité, le concentré peut se gélifier lorsqu'il est préparé selon l'art antérieur et il est très difficile d'empêcher cette gélification qui n'est pas causée par des pectines et contre laquelle on ne dispose pas actuellement d'enzymes efficaces.

L'ultrafiltration selon la présente invention élimine complètement les substances gélifiantes et par suite, de tels accidents à la conservation. Dans tous les cas, on constate que la présente invention assure une bien meilleure conservation de l'arôme que les procédés classiques.

Tout ce qui vient d'être dit à propos de la betterave rouge et de la fraise peut s'appliquer aux autres fruits dont on recherche à sauvegarder la pigmentation. Par exemple, dans le cas du cassis, on peut agir comme il est dit aux exemples 4 et 5 et d'obtenir des résultats équivalents à ceux de la fraise.

Le procédé décrit ci-dessus s'applique à de très nombreux végétaux et, en particulier, les fruits et légumes et il est évident que l'homme de l'art pourra en adapter les conditions de travail selon les matières premières de départ, la présente invention couvrant à la fois le procédé et les produits obtenus. Il permet non seulement de récupérer les pectines comme dans le cas de la pomme, mais aussi de très nombreux constituants susceptibles de valorisation et en particulier des colorants.

On remarquera également que selon la présente invention, on peut ou non remélanger les jus clairs issus de deux étages d'ultrafiltration comme on l'a souligné plus haut. Le problème dépend de nombreux facteurs législatifs.

Sur le plan réglementaire, et pour fixer les idées, on donnera l'exemple de la France. La dilution à l'eau est interdite sauf dans le cas de jus très pulpeux comme ceux de poires ou d'abricots qui, à l'état naturel, ressemblent plus à de la purée qu'à des boissons et que l'on peut allonger d'eau et de sucre pour les commercialiser sous le nom de nectar.

Dans ce cas, le mélange des jus clairs est possible. On peut également diluer entre les deux étages d'ultrafiltration avec des jus clairs ce qui n'apporte aucun constituant extérieur.

Mais il est évident que l'homme de l'art pourra choisir les conditions en fonctions des matières premières de départ et de produits qu'il se propose d'obtenir:

il est également évident pour l'homme de l'art qu'il pourra faire varier les conditions d'ultrafiltration compte tenu notamment de la texture des différents produits et qu'éventuellement, il sera amené à augmenter le nombre d'étages d'ultrafiltration.

Ainsi, par exemple, dans le cas de 3 étages d'ultrafiltration, on pourra prévoir une dilution du concentrat entre le 1er et le 2e étages, entre le 2e et le 3e ou dans les deux intervalles, entre les 3 étages.

De même, dans ce cas, on peut ou non ajouter au moins l'un des jus clairs précédents.

**Revendications**

1. Procédé d'obtention de jus clair de végétaux, dans lequel le jus venant du pressage est soumis à ultrafiltration sur membrane, donnant des premiers jus clairs et des premiers rétentats, le premier rétentat étant envoyé à une seconde ultrafiltration sur membrane, donnant des seconds jus clairs et des seconds rétentats, les ultrafiltrations étant à au moins un étage sur membrane à niveau de coupure moléculaire de l'ordre de 15 000 à 25 000, caractérisé en ce que le pH et la température des jus, à l'entrée des ultrafiltrations, sont liés par la relation:

$$T°C = -6\,pH + 80°C \pm 3°C.$$

2. Procédé selon la revendication 1, caractérisé par le fait que l'on travaille à température inférieure à celle de détérioration des pigments.

3. Procédé selon l'une des revendications 1 ou 2, caractérisé par le fait qu'au moins une partie des premiers rétentats est diluée avant nouvelle ultrafiltration.

4. Procédé selon l'une des revendications 1 à 3, caractérisé par le fait que les jus bruts sont soumis à pasteurisation préalable avant ultrafiltration.

5. Procédé selon l'une des revendications 1 à 4, caractérisé par le fait que l'on travaille sur au moins un étage d'ultrafiltration à pression d'entrée de l'ordre de 3 à 5 kg/cm² (soit approximativement 300 à 500 kPa), et à une pression de sortie de 1 à 2 kg/cm² (soit approximativement 100 à 200 kPa).

6. Procédé selon l'une des revendications 1 à 5, caractérisé par le fait qu'au moins l'un des rétentats obtenus à la sortie des ultrafiltrations est valorisable.

## Claims

1. Process for the production of clear vegetable juices, in which the juice coming from pressing is subjected to ultrafiltration on a membrane yielding primary clear juices and primary retained portions, the primary retained portions being sent to a second ultrafiltration on a membrane yielding second clear juices and second retained portions, said ultrafiltrations being, in at least one stage, on a membrane having a cut off level of molecular weight of the order of 15 000 to 25 000, characterized by the fact that the pH and the temperature of the juices, at the introduction to the ultrafiltrations, are linked by the formula:

$$T°C = -6\,pH + 80°C \pm 3°C$$

2. Process according to Claim 1, characterized in that the process is carried out at a temperature below that causing deterioration of pigments.

3. Process according to Claim 1 or 2, characterized in that at least one of the primary retained portions is diluted before a new ultrafiltration.

4. Process according to one of Claims 1 to 3, characterized in that the raw juices are subjected to a previous pasteurization before ultrafiltration.

5. Process according to one of Claims 1 to 4, characterized in that the process is carried out, at least in one ultrafiltration stage, under a pressure, at the introduction, of the order of 3 to 5 kg/cm² (i.e. about 300 to 500 kPa) and under a pressure, at the exit, of the order of 1 to 2 kg/cm² (i.e., about 100 to 200 kPa).

6. Process according to Claims 1 to 5, characterized in that at least one of the retained portions obtained at the exit of the ultrafiltration is a valorizable constituent.

## Patentansprüche

1. Verfahren zur Gewinnung von klarem Pflanzensaft, bei dem der aus dem Pressen her kommende Saft einem Ultrafiltrieren durch eine Membran unterzogen wird, bei welchen die ersten klaren Säfte und die ersten zurückbehaltenen Rückstände gewonnen werden, wonach der erste zurückbehaltene Rückstand einem zweiten Ultrafiltrieren durch eine Membran unterzogen wird, bei welchen die zweiten klaren Säfte und die zweiten zurückbehaltenen Rückstände gewonnen werden, und jedes Ultrafiltrieren mindestens einstufig und so geführt wird, dass das molekulare Trennungsniveau an der Membran in der Grössen ordnung von 15 000 bis 25 000 liegt, dadurch gekennzeichnet, dass der pH-Wert und die Temperatur der Säfte bei Beginn jedes Ultrafiltrierens in folgender Beziehung zueinander stehen:

$$T°C = -6\,pH + 80°C \pm 3°C$$

2. Verfahren nach Anspruch 1, dadurch gekennzeichnet, dass die Arbeitstemperatur tiefer als die jenige liegt, bei der die Pigmente verfallen.

3. Verfahren nach Anspruch 1 oder 2, dadurch gekennzeichnet, dass mindestens ein Teil der ersten zurückbehaltenen Rückstände verdünnt wird, bevor er einem neuen Ultrafiltrieren unterzogen wird.

4. Verfahren nach einem der Ansprüche 1 bis 3, dadurch gekennzeichnet, dass die rohen Säfte pasteurisiert werden, bevor sie dem Ultrafiltrieren unterzogen werden.

5. Verfahren nach einem der Ansprüche 1 bis 4, dadurch gekennzeichnet, dass mit mindestens einer Ultrafiltrierens-Stufe mit einem Eingangsdruck in der Grössenordnung von 3 bis 5 kg/cm² (d.h. ungefähr 300 bis 500 kPa) und einem Ausgangsdruck von 1 bis 2 kg/cm² (d.h. ungefähr 100 bis 200 kPa) gearbeitet wird.

6. Verfahren nach einem der Ansprüche 1 bis 5, dadurch gekennzeichnet, dass mindestens einer der am Ausgang der Ultrafilteranlage gewonnenen Rückstände wirtschaftlich benutzbar ist.